# EUROPÄISCHE PATENTSCHRIFT

(11) **EP 2 188 882 B1**
(45) Veröffentlichungstag und Bekanntmachung des Hinweises auf die Patenterteilung: **13.04.2016**
(21) Anmeldenummer: 08804460.7
(22) Anmeldetag: 19.09.2008
(51) Int. Cl.: H02K 5/128, H02K 49/10, F04D 13/06

(54) **SPALTROHR UND VERFAHREN ZUR HERSTELLUNG**
SEPARATING CAN AND METHOD FOR PRODUCING THE SAME
GAINE ET PROCÉDÉ DE FABRICATION

(30) Priorität: 21.09.2007 EP 07018541
(43) Veröffentlichungstag der Anmeldung: 26.05.2010
(73) Patentinhaber: Siemens Aktiengesellschaft, 80333 München (DE)
(72) Erfinder: BODE, Ralf, 47441 Moers (DE); LANG, Sebastian, 47809 Krefeld (DE)
(86) Internationale Anmeldenummer: PCT/EP2008/062526
(87) Internationale Veröffentlichungsnummer: WO 2009/040308

(56) Entgegenhaltungen:
- EP-A1- 1 281 696
- DE-A1- 3 413 930
- DE-A1- 3 941 444
- DE-A1- 19 744 289
- DE-C1- 3 823 113
- DE-U1- 20 007 099
- DE-U1-202004 013 081
- US-A- 4 952 429
- US-A1- 2003 193 260
- US-B1- 6 293 772

## Beschreibung

Die Erfindung betrifft ein Spaltrohr und ein Verfahren zur Herstellung desselben.

Strömungsmaschinen und ihre elektrischen Antriebsmotoren sind meist in getrennten Gehäusen untergebracht. Dadurch werden in den Strömungsmaschinen Wellendichtungen benötigt, welche Leckagen des geförderten Fluids nach außen verhindern sollen.

Strömungsmaschine und Antriebsmotor lassen sich ohne Wellendichtung in einem Gehäuse unterbringen, wenn im Elektromotor zwischen dem Rotor, der vom Fluid berührt wird, und dem Stator eine Trennung durch ein rohrförmiges Bauteil erfolgt. Das Bauteil wird wegen seiner Position im Luftspalt als "Spaltrohr" bezeichnet.

Bisher verwendete Spaltrohre haben einen oder mehrere der folgenden Nachteile:
a) Elektrische Leitfähigkeit: Das Spaltrohr erwärmt sich durch Wirbelströme. Die Wärme muss abgeführt werden und die Maschine ist insgesamt in ihrer Leistung sehr begrenzt.
b) Geringe Festigkeit: Das Spaltrohr kann nur geringe Differenzen zwischen Innen- und Außendruck aufnehmen. Die Technik eignet sich nicht für Hochdruckmaschinen.
c) Die Fertigungstechnik lässt nur eine geringe Baugröße des Spaltrohrs zu, wodurch die Baugröße der Maschine beschränkt wird.

Bisher konnten nur kleine Maschinen (insbesondere Pumpen) geringerer Leistung mit Spaltrohr bzw. Spalttopf gebaut werden. Folgende Werkstoffe kamen hierbei bisher zum Einsatz:
a) metallische Spezial- bzw. Superlegierungen wie Hastelloy oder Inconel
   (Nachteil: Die elektrische Leitfähigkeit induziert Wirbelströme, die den Wirkungsgrad von Hochleistungskompressoren unakzeptabel herabsetzen würden)
b) CFK, Carbon-Faser verstärkte Kunststoffe (Nachteil: Auch die Kohlefaser hat eine noch zu hohe elektrische Leitfähigkeit, die den Wirkungsgrad von Hochleistungskompressoren - aufgrund der induzierten Wirbelströme - zu stark absenken würde)
c) partikel- oder glasfaserverstärkte sowie unverstärkte Hochleistungspolymere (z. B. FORTRON von der Firma Ticona)
   (Nachteil: Für den Einsatz in Hochdruckkompressoren ist die erreichbare Steifigkeit und Festigkeit viel zu gering)
d) monolithische Technische Keramik wie Zirkoniumdioxid (z. B. FRIALIT von der Firma Friatec).
   (Nachteil: Beim Herstellen von Spalttöpfen wurde bisher zunächst keramisches Pulver kalt-isostatisch verpresst (Grünkörper) und anschließend versintert. Der Sinterprozess verursacht dabei einen Schrumpf von 18-25% sowie festigkeitsreduzierende Gefügefehler. Zudem käme es beim Sintern sehr großer Spaltrohre - wie sie für Hochdruckkompressoren erforderlich sind - zu massebedingten Verformungen, bis hin zu Rissbildungen. Aus diesen Gründen war es bisher nicht möglich, Spaltrohre bzw. Spalttöpfe mit einer Länge deutlich über 300 mm aus einem Stück herzustellen. Zudem ist die mittels dieses Herstellungsverfahrens erreichbare Schadenstoleranz bei Drücken von bis zu 150 bar zu gering)

Die DE 20 2004 013 081 U1 offenbart ein Spaltrohr, das aus einem keramischen oder glasartigen material besteht. Die DE 200 07 009 U1 und die US 2003/193260 A1 beschreiben gesinterte keramische spaltrohre. Derartige Spaltrohre sind für den angestrebten Einsatzzweck zu spröde. Ein in der US 6,293,772 B1 beschriebenes Spaltrohr besteht aus einer faserverstärkten Polymermatrix, die insbesondere Polymerfasern aufweist und mittels Keramik verstärkt sein kann. Auf gleiche Weise offenbaren DE 38 23 113 C1 und US 4,952,429 A einen insbesondere oberflächlichen Schutz gegen Abrasion mittels Keramikpartikeln, beispielsweise Zirkonoxid. Spalttöpfe mit teilweise keramischen Anteilen sind auch in der DE 39 41 444 A1, der DE 197 44 289 A1 und der DE 34 13 930 A1 beschrieben. Sämtliche der vorgestellten Lösungen erfüllen nicht hinreichend das oben dargestellte Anforderungsprofil, insbesondere nicht hinsichtlich der Elastizitäts- und Festigkeitsanforderungen.
Aus der EP 1 281 696 A1 ist es bekannt, für Komponenten einer Hochtemperaturanlage, wie zum Beispiel einem Kernreaktor, ein Verbundmaterial aus Siliziumkarbid SiC zu verwenden.

Die Erfindung hat es sich daher zur Aufgabe gemacht, ein Spaltrohr und ein Verfahren zur Herstellung eines solchen zu schaffen, welches hohe Differenzdrücke zu ertragen vermag.

Zur Lösung wird erfindungsgemäß vorgeschlagen, dass das Spaltrohr zumindest zum Teil aus einer keramikfaserverstärkten Poly-mermatrix besteht, wobei die Fasern als Endlosfasern, in einer Länge von mindestens 30mm ausgebildet sind. Die rückbezogenen Ansprüche beinhalten vorteilhafte Weiterbildungen.

Das Spaltrohr kann dadurch hergestellt werden, dass entsprechend geeignete keramische Fasern in geeigneter Orientierung unter Zugabe eines Bindemittels auf einen Dorn gewickelt werden, wobei das Bindemittel aus einem keramischen bzw. glasartigen Pulver oder einem Schlicker aus einem keramischen/ glasartigen Pulver bestehen kann, und durch anschließende Wärmebehandlung, welche an Atmosphäre oder an Luft oder in einer HIP-Anlage stattfinden kann, das Bindemittel zusammensintert oder verschmilzt.
Dabei kann der Prozess entweder so geführt sein, dass der gewickelte Faserkörper zunächst nur eine mechanische Grundfestigkeit erhält und noch mechanisch bearbeitet werden kann, oder dass das Spaltrohr unmittelbar die erforderliche Festigkeit und Dichtigkeit für die Anwendung erhält.

Alternativ dazu kann die Dichtheit dadurch erreicht werden, dass die Poren des wärmebehandelten Faserkörpers im Anschluss an oben beschriebenen Prozess verschlossen werden. Dies kann z. B. durch Hochdruckinfiltration mit flüssigem Glas oder durch einen Emaillierungsprozess mit Eintauchen in einen flüssigen Schlicker (Fritte) und anschließendes Brennen oder Glasieren der Oberfläche oder durch andere geeignete Prozesse geschehen.

Nachteile bisheriger Spaltrohrkonstruktionen können vermieden werden, wenn ein Spaltrohr aus einer Keramikfaser-verstärkten Polymermatrix verwendet wird. Hierbei können unter anderem Siliziumkarbidfasern oder hochreine Aluminiumoxidfasern oder Zirkoniumdioxidfasern oder auch mullitische Fasern eingesetzt werden. Sämtliche dieser Fasern sorgen für eine hohe Zugbelastbarkeit. Die Belastbarkeit kann weiterhin gesteigert werden, wenn die Verbundart der Fasern optimiert wird, insbesondere, wenn Wirrfasern oder Endlosfasern bzw. Faserbündel (Rovings) sowie Fasermatten (Gewebe, Gelege, usw.) verwendet werden. Die Abrasionsresistenz der Polymermatrix kann vorteilhaft erhöht werden, wenn die Oberfläche des Spaltrohrs zudem zusätzlich mit keramischen Partikeln durchsetzt bzw. beschichtet wird.

Im Folgenden wird die Erfindung anhand eines speziellen Ausführungsbeispiels unter Bezugnahme auf Zeichnungen näher erläutert. Es zeigen:

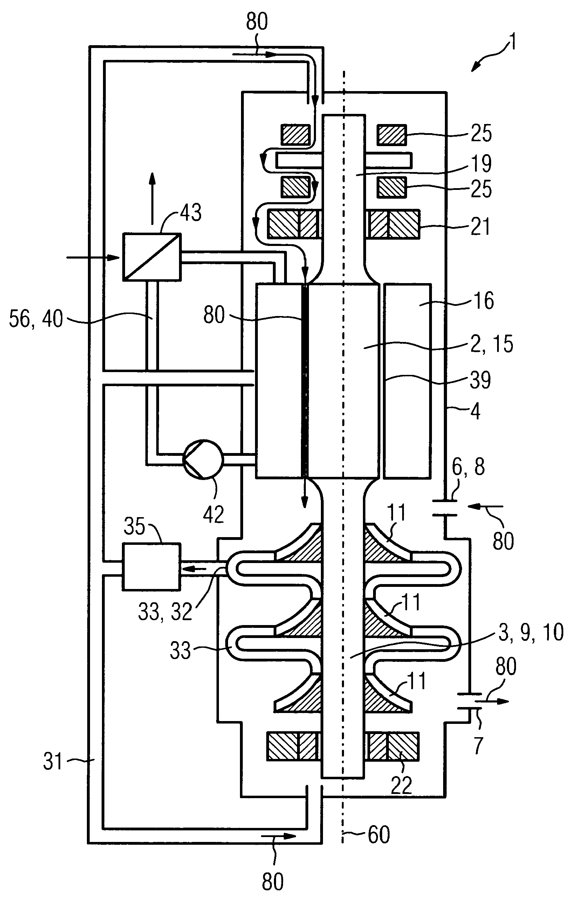

- Figur 1: eine schematische Darstellung eines Längsschnitts durch eine Verdichtereinheit mit einem erfindungsgemäßen Spaltrohr.

Figur 1 zeigt schematisch einen Schnitt längs einer Verdichtereinheit 1, welche als wesentliche Bauteile einen Motor 2 und einen Verdichter 3 in einem gasdicht ausgebildeten Gehäuse 4 aufweist. Das Gehäuse 4 beherbergt den Motor 2 und den Verdichter 3. Im Bereich des Übergang von dem Motor 2 zu dem Verdichter 3 ist das Gehäuse 4 mit einem Einlass 6 und einem Auslass 7 versehen, wobei durch den Einlass 6 mittels eines Ansaugstutzens 8 das zu verdichtende Fluid angesaugt wird und durch den Auslass 7 das verdichtete Fluid abströmt.

Die Verdichtereinheit 1 ist im Betrieb vertikal angeordnet, wobei ein Motorrotor 15 des Motors 2 über einem Verdichterrotor 9 des Verdichters 3 zu einer gemeinsamen Welle 19 vereint sind, die sich um eine gemeinsame vertikale Drehachse 60 dreht.

Der Motorrotor 15 ist in einem ersten Radiallager 21 am oberen Ende des Motorrotors 15 gelagert.
Der verdichterrotor 9 ist mittels eines zweiten Radiallagers 22 in unterer Position gelagert.
Am oberen Ende der gemeinsamen Welle 19 - also am oberen Ende des Motorrotors 15 - ist ein Axiallager 25 vorgesehen.

Der als Zentrifugalverdichter ausgebildete Verdichter 3 weist drei Verdichterstufen 11 auf, die jeweils mittels einer Überströmung 33 in Verbindung stehen.

Die elektromagnetischen Lager 21, 22, 25 sind mittels eines Kühlsystems 31 auf Betriebstemperatur gekühlt, wobei das Kühlsystem 31 eine Anzapfung 32 in einer Überströmung des Verdichters 3 vorsieht. Von der Anzapfung 32 wird mittels Rohrleitungen ein Teil des Fördermediums, welches vorzugsweise Erdgas ist, durch einen Filter 35 geleitet und anschließend durch zwei separate Rohrleitungen zu den jeweils äußeren Lagerstellen (erstes Radiallager 21 und viertes Radiallager 24 sowie Axiallager 25) geführt. Diese Kühlung mittels des kalten Fördermediums 80 erspart zusätzliche Versorgungsleitungen.

Der Motorrotor 15 ist von einem Stator 16 umgeben, der eine auf dem inneren Durchmesser als Spaltrohr 39 ausgebildete Kapselung aufweist, so dass das aggressive Fördermedium 80 Wicklungen des Stators 16 nicht beschädigt. Das Spaltrohr 39 ist hierbei derart ausgelegt, dass es den vollen Betriebsdruck zu ertragen vermag. Dies auch deshalb, weil eine separate Kühlung 40 für den Stator vorgesehen ist, in der ein eigenes Kühlmedium 56 zirkuliert. Eine Pumpe 42 sorgt hierbei für einen Kreislauf über einen Wärmetauscher 43.
Zumindest ist das Spaltrohr 39 derart ausgeführt, dass der Abschnitt, der sich zwischen dem Stator 16 und dem Motorrotor 15 erstreckt zwar eine dünne Wandstärke aufweist jedoch bei einer vollständigen Füllung der Statorkühlung 40 mittels des Kühlmediums 56 in der Lage ist, dem Auslegedruck Stand zu halten. Auf diese Weise werden größere Wirbelstromverluste in diesem Bereich vermieden und der Wirkungsgrad der Gesamtanordnung verbessert sich.

## Patentansprüche

1. Spaltrohr (39), welches zumindest zum Teil aus einer Polymermatrix besteht, die mittels Fasern verstärkt ist **dadurch gekennzeichnet, dass** es zumindest zum Teil aus einer keramikfaserverstärkten Polymermatrix besteht, wobei die Fasern als Endlosfasern in einer Länge von mindestens 30mm ausgebildet sind.

2. Spaltrohr (39) nach Anspruch 2,
**dadurch gekennzeichnet, dass**
die Fasern zumindest zum Teil aus Siliziumcarbid bestehen.

3. Spaltrohr (39) nach Anspruch 2,
**dadurch gekennzeichnet, dass**
die Fasern zumindest zum Teil aus Aluminiumoxid bestehen.

4. Spaltrohr (39) nach Anspruch 2,
**dadurch gekennzeichnet, dass**
die Fasern zumindest zum Teil aus Zirkoniumdioxid bestehen.

5. Spaltrohr (39) nach einem der Ansprüche 1 bis 4,
**dadurch gekennzeichnet, dass**
die Fasern einem wirren Verbund miteinander bilden.

6. Spaltrohr (39) nach einem der Ansprüche 1 bis 4,
**dadurch gekennzeichnet, dass**
die Fasern als Faserbündel, insbesondere als Roving ausgebildet sind.

7. Spaltrohr (39) nach einem der Ansprüche 1 bis 4,
**dadurch gekennzeichnet, dass**
die Fasern als Fasermatte ausgebildet sind.

8. Spaltrohr (39) nach einem der Ansprüche 1 bis 7,
**dadurch gekennzeichnet, dass**
die Oberfläche des Spaltrohrs (39) mit keramischen Partikeln durchsetzt ist.

## Claims

1. Separating can (39), which consists at least partly of a polymer matrix which is reinforced by means of fibers, **characterized in that** it consists at least partly of a ceramic fiber reinforced polymer matrix, wherein the fibers are formed as continuous filaments of a length of at least 30 mm.

2. Separating can (39) according to Claim 1, **characterized in that** the fibers consist at least partly of silicon carbide.

3. Separating can (39) according to Claim 1, **characterized in that** the fibers consist at least partly of aluminum oxide.

4. Separating can (39) according to Claim 1, **characterized in that** the fibers consist at least partly of zirconium dioxide.

5. Separating can (39) according to one of Claims 1 to 4, **characterized in that** the fibers form a random interlinkage with one another.

6. Separating can (39) according to one of Claims 1 to 4, **characterized in that** the fibers are formed as a bundle of fibers, in particular a roving.

7. Separating can (39) according to one of Claims 1 to 4, **characterized in that** the fibers are formed as a fiber mat.

8. Separating can (39) according to one of Claims 1 to 7, **characterized in that** the surface of the separating can (39) is interspersed with ceramic particles.

## Revendications

1. Gaine (39) qui est au moins en partie en une matrice polymère renforcée au moyen de fibres,
**caractérisée en ce qu'**elle est au moins en partie en une matrice polymère renforcée par des fibres céramiques, les fibres étant sous la forme de fibres sans fin d'une longueur d'au moins 30 mm.

2. Gaine (39) suivant la revendication 2,
**caractérisée en ce que** les fibres sont au moins en partie en carbure de silicium.

3. Gaine (39) suivant la revendication 2,
**caractérisée en ce que**
les fibres sont au moins en partie en oxyde d'aluminium.

4. Gaine (39) suivant la revendication 2,
**caractérisée en ce que**
les fibres sont au moins en partie en dioxyde de zirconium.

5. Gaine (39) suivant l'une des revendications 1 à 4,
**caractérisée en ce que**
les fibres forment entre elles un composite enchevêtré.

6. Gaine (39) suivant l'une des revendications 1 à 4,
**caractérisée en ce que**
les fibres sont sous la forme d'un faisceau de fibres, notamment sous la forme d'un rowing.

7. Gaine (39) suivant l'une des revendications 1 à 4,
**caractérisée en ce que**
les fibres sont sous la forme d'un mate de fibres.

8. Gaine (39) suivant l'une des revendications 1 à 7,
**caractérisée en ce que**
la surface de la gaine (39) est traversée par des particules de céramique.
